# EUROPEAN PATENT SPECIFICATION

(11) **EP 0 690 372 B1**
(45) Date of publication and mention of the grant of the patent: **03.03.2010**
(21) Application number: 95902961.2
(22) Date of filing: 15.12.1994
(51) Int. Cl.: G06F 9/38, G06F 9/30

(54) **SUPERSCALAR MICROPROCESSOR INSTRUCTION PIPELINE INCLUDING INSTRUCTION DISPATCH AND RELEASE CONTROL**
SUPERSKALARE MICROPROZESSOR-BEFEHLS PIPELINE MIT ABSENDUNG VON BEFEHLEN UND FREISETZUNG
PIPELINE D'INSTRUCTIONS DE MICROPROCESSEUR SUPERSCALAIRE AVEC COMMANDE DE DISTRIBUTION ET DE DIFFUSION D'INSTRUCTIONS

(30) Priority: 15.12.1993 US 168094
(43) Date of publication of application: 03.01.1996
(73) Proprietor: MIPS Technologies, Inc. (a Delaware corporation), Mountain View, CA 94043 (US); KABUSHIKI KAISHA TOSHIBA, Tokyo (JP)
(72) Inventor: BRATT, Joseph, P., San Jose, CA 95129 (US); HSU, Peter, Yan-Tek, Fremont, CA 94555 (US); JOSHI, Chandra, S., Saratoga, CA 95070 (US); NOFAL, Monica, R., Los Altos, CA 94024 (US); RODMAN, Paul, Palo Alto, CA 94306 (US); SCANLON, Joseph, T. Apartment K-209, Sunnyvale, CA 94086 (US); TANG, Man, Kit, Milpitas, CA 95035 (US)
(74) Representative: von Fischern, Bernhard
(86) International application number: PCT/JP1994/002108
(87) International publication number: WO 1995/016952

(56) References cited:
- EP-A- 0 331 372
- EP-A- 0 399 760
- EP-A- 0 432 774
- EP-A- 0 449 661
- EP-A- 0 518 420
- JP-A- 4 054 638
- JP-A- 56 092 643
- JP-A- 59 043 440
- G. S. TJADEN ET AL.: "Detection and Parallel Execution of Independent Instructions" IEEE TRANS. ON COMPUTERS, vol. c-19, no. 10, October 1970 (1970-10), pages 889-895, XP000224495
- KENJI MINAGAWA ET AL: "PRE-DECODING MECHANISM FOR SUPERSCALAR ARCHITECTURE" PROCEEDINGS OF THE PACIFIC RIM CONFERENCE ON COMMUNICATIONS, COMPUT AND SIGNAL PROCESSING, VICTORIA, CA, MAY 9 - 10, 1991, vol. VOL. 1, no. -, 9 May 1991 (1991-05-09), pages 21-24, XP000280266 INSTITUTE OF ELECTRICAL AND ELECTRONICS ENGINEERS
- PATENT ABSTRACTS OF JAPAN vol. 016, no. 247 (P-1365), 5 June 1992 (1992-06-05) & JP 04 054638 A (TOSHIBA CORP), 21 February 1992 (1992-02-21)
- OKLOBZIJA V G: "ISSUES IN CPU-COPROCESSOR COMMUNICATION AND SYNCHRONIZATION" MICROPROCESSING AND MICROPROGRAMMING,NL,ELSEVIER SCIENCE PUBLISHERS, BV., AMSTERDAM, vol. 24, no. 1/05, 1 August 1988 (1988-08-01), pages 695-700, XP000087944 ISSN: 0165-6074
- A. C. DOWNTON: "Computers and Microprocessors" 1984 , VAN NORSTRAND REINHOLD CO. LTD. , UK. ISBN: 0-442-30571-0 XP002131676 * page 79 - page 80 *
- DUMONT A ET AL: "BRISC: A RISC BIPROCESSOR ARCHITECTURE DEDICATED TO POWER APPLICATIONS" MICROPROCESSING AND MICROPROGRAMMING,NL,ELSEVIER SCIENCE PUBLISHERS, BV., AMSTERDAM, vol. 24, no. 1 - 05, 1 August 1988 (1988-08-01), pages 589-596, XP000112332 ISSN: 0165-6074

## Description

### Technical Field

The present invention relates generally to pipelined superscalar microprocessors. More particularly, the present invention relates to instruction dispatching in a pipelined superscalar microprocessor in normal operation, and after exception processing.

### Background Art

Microprocessors have a limited amount of on-chip resources to perform addressing, execution and control operations. There is a trade-off between a cost associated with the microprocessor (both in dollars and in execution speed), and the amount of resources. At some point, a designer of a microprocessor establishes a particular resource set. Thereafter, those resources must be used as efficiently as possible to maximize performance.

For example, for scalar processors, one significant resource limitation was the availability on the chip of only to be retrieved from a memory and presented to the ALU. The ALU operated on the data and provided an output. Afterwards, it would be ready to perform another calculation, after other operands were retrieved from memory.

It was soon realized that because the ALU was a critical component, it should not sit idle. A structure identified as a pipeline was added before the ALU to improve performance. The pipeline improved performance because it allowed the ALU to process operands as fast as it was able, there was no waiting for its operands.

Problems developed with pipelined structures when conditions arose that caused the pipeline to contain incorrect data. One example of this type of condition occurs from a conditional branch condition. As the pipeline could include data corresponding to only one of the possibilities of the branch condition, there were times that the data would be incorrect. The term exception, or trap, developed to identify the requirement of exceptional processing required by the system.

Solutions developed for dealing with the exceptions. The cycle wherein each new solution produced a new problem continues. It is a goal to attempt to maximize performance, continually developing new and improved systems.

A superscalar microprocessor has the same type of problems, only those problems are far greater and far more complex. The superscalar microprocessor has multiple functional units that can execute instructions and perform other tasks at the same time as other functional units. For example, where the scalar processor has a pipeline that includes one instruction per pipeline stage, the superscalar microprocessor has a pipeline that can have multiple instructions per stage.

Supercomputers often employ a superscalar architecture. Performance versus cost tradeoffs are important issues. It becomes very important to extract maximum computing power from the resources provided in the microprocessor. Issues relating to extraction of maximum performance include fast, efficient pipelines that process exceptions quickly. Routing instructions to appropriate functional units as rapidly as possible requires fast analysis of busy resources.

EP 049661 discloses a computer for simultaneously executing plural instructions. A decision means determines the types of operation and the possibility of simultaneous execution for the plural instructions when they are read out from the main memory to the cache memory. The result of this determination is called a decision result. The plural instructions and decision result are stored in the cache memory. The decision process is performed for several subsets of the plural instructions read out from the main memory to the cache memory in order.

Then, the plural instructions are respectively assigned to corresponding operation units according to the decision result and executed. As a result of this arrangement, the repeated decision process for the plural instructions need not be repeated each time the instructions are read out from the cache memory to the operation unit.

### Disclosure of Invention

The present invention provides a method for providing a fast and efficient pipeline in a superscalar microprocessor having a multiple implementation. The pipeline of the present invention quickly matches instructions to be dispatched in a pipeline with available resources. Exceptions occurring in the pipeline are processed efficiently, all in the same pipeline stage, in a uniform manner.

Essential features of the invention are defined in the independent Claim. Further preferred embodiments are defined according to the dependent Claims.

Reference to the remaining portions of the specification, including the drawing and claims will realize other features and advantages of the present invention.

### Brief Description of Drawings

Fig. 1 is a block diagram of a superscalar microprocessing unit 10 having an integer unit 12 and a floating point unit 14;
Fig. 2 is a block diagram illustrating a set of functional instruction flow paths (pipelines) in SMU 10;
Fig. 3 is a block diagram illustrating a five stage integer pipeline 250 portion of the pipeline structure of SMU 10, as well as a description of functions performed at the individual stages;
Fig. 4 is a block diagram illustrating a decoupling of a floating-point pipeline 300 portion of the pipeline structure of SMU 10 from integer pipeline 250;
Fig. 5 is a flowchart illustrating a combined pipeline 350 including integer pipeline 250, external cache pipeline 302, and floating point pipeline 300;
Fig. 6 is a detailed block diagram of dispatch unit 202 shown in Fig. 2;
Fig. 7 is a representation of a template for a reformatted instruction 450 after predecoding;
Fig. 8 is a block diagram of datapath flow through integer dispatch unit 402 illustrated in Fig. 6;
Fig. 9 is a schematic representation illustrating use of a register scoreboard 480 to establish and resolve resource contention;
Fig. 10 is a simplified block diagram of a fetch and dispatch system 500 according to the preferred embodiment;
Fig. 11 is an illustration of operation of an instruction queue such as that shown in Fig. 10 taken over four cycles;
Fig. 12 is a representation of a template for a reformatted floating point operation instruction 550 and a template for a reformatted floating point memory operation 552 after reformatting;
Fig. 13 is a schematic diagram illustrating dispatching in SMU 10 to perform a floating point load operation; and
Fig. 14 is a schematic diagram illustrating dispatching in SMU 10 to perform a floating point store operation.

### Best Mode for Carrying Out the Invention

Next, the present invention will be described with reference to the drawings in the following order.

### Contents:

I. Introduction
II. Pipeline Structure
III. Dispatching
IV. Pipeline Refill and Exception Processing
V. Conclusion

### I. Introduction

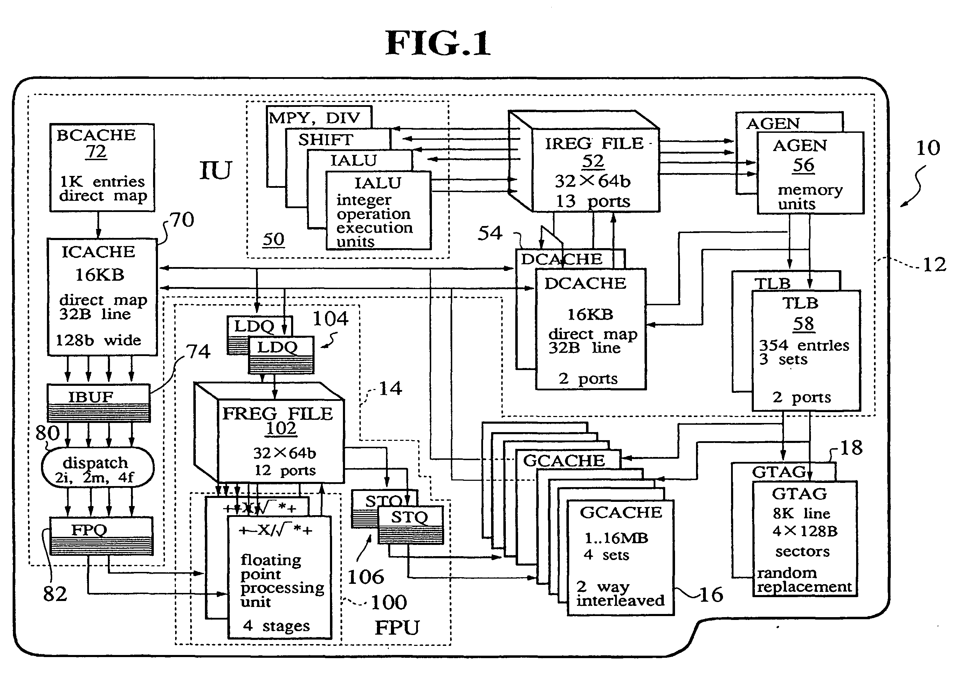

Fig. 1 is a block diagram of a superscalar microprocessing unit 10 having an integer unit 12 and a floating point unit 14. In the preferred embodiment, integer unit 12 and floating point unit 14 cooperatively interact to produce a single microprocessor, though their functions are physically divided between two discrete integrated circuit devices. Microprocessing unit 10 includes a global external cache (GS) 16 accessed via a tag memory unit 18. External cache 16 is global because it is available to both integer unit 12 and floating point unit 14.

Integer unit 12 includes a number of functional units. These units include an integer operation execution unit 50 coupled to an integer register file 52. Execution operation unit 50 includes two integer arithmetic logic units (IALUs), a shifter and a multiply-add unit. Execution unit 50 operates on data received from register file 52 and writes results back.

Integer unit 12 loads integer data from an on-board data cache (DS) 54 into register file 52 and stores data from register file 52 back to DS 54 and to an external cache memory through floating point unit 14. An address generator 56 provides virtual addresses to DS 54 and will also use data from register file 52 to generate addresses.

Data stored in DS 54 only represents a portion of the total available memory. There are times when data needed by integer unit 12 is unavailable in DS 54. In those instances, integer unit 12 accesses external cache 16 to bring desired data into DS 54. To access external cache 16, integer unit 12 converts virtual addresses provided from address generator 56 to physical addresses using a translation look-aside buffer (TLB) 58. TLB 58 provides both external cache 16 and tag memory unit 18 with a physical address. Thereafter, external cache 16 fills DS 54 with the desired data.

Integer unit 12 uses instructions to control data flow and operations. Integer unit 12 includes an instruction cache (IS) 70, a branch prediction cache (BS) 72, an instruction buffer 74, a dispatching unit 80 and a floating point instruction queue (FPQ) 80 to obtain and route instructions to appropriate resources, in an appropriate order, of superscalar processing unit 10.

IS 70 stores and issues instructions. Some instructions are branch instructions that can produce a discontinuity in program flow. BS 72, coupled to IS 70, stores pointers to branch targets for each branch instruction in IS 70. Instruction buffer 74, coupled to an output of IS 70, loads instructions from IS 70 in a desired order.

Dispatching unit 80 reads instructions from instruction buffer 74, checks them, verifies that needed hardware resources are available, and issues the instructions to appropriate functional units of the microprocessing unit 10. Dispatching unit 80 routes instructions destined for floating point unit 14 to floating point queue 82. Dispatching unit 80 issues integer operations to execution unit 50 and issues memory instructions to address generator 56.

Floating point unit 14 includes floating point execution unit (FPXU) 100, floating point register file (FREG) 102, a floating point load queue (LDQ) 104, and a store queue 106. FPXU 100 includes two floating point execution units that operate on data read from FREG 102. FPXU writes results back to FREG 102.

FPU 14 does not include any address control structures, so integer unit 12 accesses necessary data from external cache 16 and loads them into LDQ 104. Thereafter, a load instruction to FPU 14 reads appropriate data from LDQ 104 and writes it into FREG 102. Similarly, stores from FREG 102 to external cache 16 go through STQ 106. A store instruction in FPU 14 causes it to transfer data into STQ 106. Thereafter, integer unit 12 controls the stores of the data into external cache 16.

The superscalar nature of the SMU 10 contributes to the complexity of the implementation described previously. As there are a number of execution units and address generation units available for concurrent operation, the preferred embodiment implements SMU 10 with a multi-pathway pipelined architecture.

For example, instruction buffer 74 retrieves four instructions per cycle from IS 70. Dispatch unit 80 routes up to two memory instructions to address generation units 56, up to two integer operation instructions to execution unit 50, and up to four floating point instructions to FPQ 82, each and every cycle. The preferred embodiment implements its pipeline in a continuous operation mode. In other words, the pipeline never stops, but continues to advance instructions from one stage of a pipeline to another. Details regarding dispatching and pipeline control and refill are discussed below.

### II. Pipeline Structure

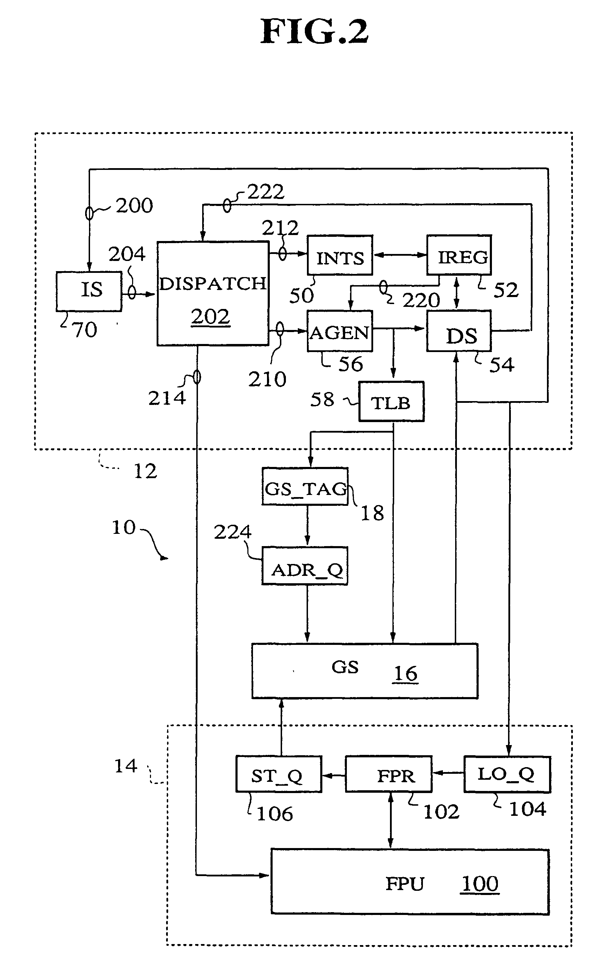

Fig. 2 is a block diagram illustrating a set of functional instruction flow paths (pipelines) in SMU 10. Items similarly numbered to those of Fig. 1 represent the same component. After initialization of a system employing SMU 10, integer unit 12 loads a set of appropriate instructions from external cache 16 into IS 70 using a data bus 200. Each instruction is thirty-two bits wide. Integer unit 12 loads four instructions at one time into IS 70, therefore data bus 200 is 12.8 bits wide.

A dispatch unit 202 includes some predecoding functionality, instruction buffer 74, dispatch unit 80, some floating point formatting functionality, and FPQ 82, all shown in Fig. 1. Dispatch unit 202 receives four instructions at one time over a data bus 204, adds eighteen bits to each instruction to facilitate routing, enqueues instructions, and routes from zero to four instructions per cycle. The addition of the extra bits is part of the predecoding operation.

The instruction dispatching operation always dispatches instructions in order. That is, should dispatch unit 202 be unable to dispatch any particular instruction because of some reason (those reasons will be further explained below), then instructions later in the instruction stream cannot be dispatched until all earlier instructions have been dispatched.

Dispatch unit 202 has a number of pipelines it can route instructions to. These pipelines include a memory pipeline 210, an integer pipeline 212, and a floating point pipeline 214. Memory pipeline 210 and integer pipeline 212 each include two independent pipelines, while floating point pipeline 214 is four instructions wide, including space for two floating point operations and two floating point memory operations.

Dispatch unit 202 routes memory instructions to address generator 56 via memory pipeline 210, routes integer operations to execution unit 50, and routes floating point instructions to FPU 14. Note, dispatch unit 202 routes some floating memory instructions to both memory pipeline 210 for address generation, and to floating point pipeline 214. Dispatched unit 202 routes some floating point instructions, such as floating point compare and a conditional move, to both integer pipeline 212 for execution, and to floating point pipeline 214.

In addition to the components described with respect to Fig. 1, Fig. 2 includes an integer store pipeline 220 coupling an output of DS 54 to dispatch 202, and an address queue 224 coupled between tag memory unit 18 and external cache 16. Integer store pipeline 222 permits integer unit 12 to update external cache 16 after it does an store operation into DS 54. Integer unit 12 packages an integer store instruction and its associated data together in dispatch unit 202. After packaging, integer unit 12 dispatches the instruction and data to floating point pipeline 214 in order for FPU 14 to store the data to external cache 16.

Appropriate addresses to store data from STQ 106 are available from integer unit 12 via address queue 224. It is part of the function of dispatch unit 202 to match instructions being sent to FPU 14 with appropriate data in LDQ 104 and address queue 224.

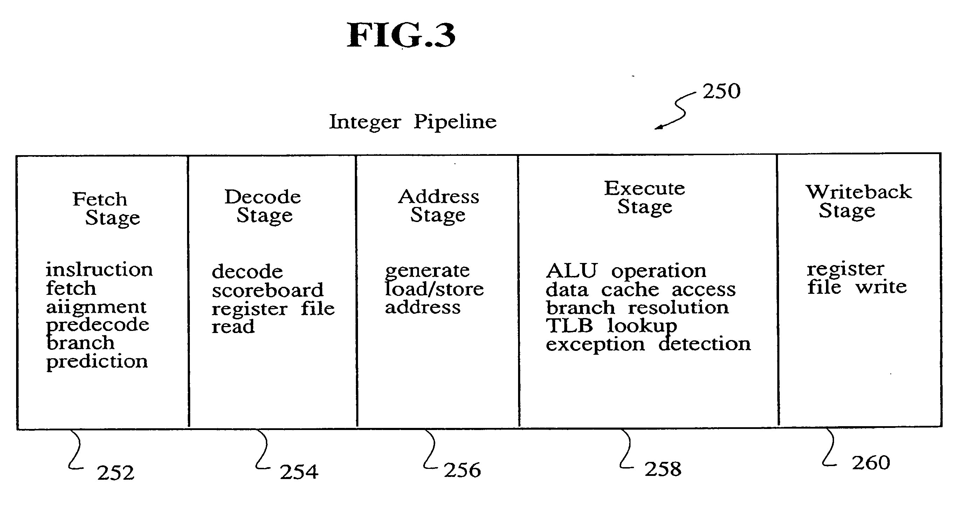

Fig. 3 is a block diagram illustrating a five stage integer pipeline 250 portion of the pipeline structure of SMU 10, as well as a description of functions performed at the individual stages. Advantages of integer pipeline 250 include that it has a low-latency between a fetch of an instruction and its execution, no load delay slot, same cycle data forwarding for dependent load after store, and the characteristics that a branch and a delay slot are able to execute together in the same cycle. In the preferred embodiment, SMU 10 provides a processor for use in a reduced instruction set computer (RISC). This RISC architecture affects many of the design and implementation described herein.

The following description of Fig. 3 references components illustrated in Fig. 1 and Fig. 2. Integer pipeline 250 includes a fetch stage 252, a decode stage 254, an addressing stage 256, an execute stage 258 and a writeback stage 260. Integer pipeline 250 includes both memory pipeline 210 and integer instruction pipeline 212.

Fetch stage 252 has integer unit 12 fetch instructions into IS 70 from external cache 16 via data bus 200. As mentioned earlier, dispatch unit 202 includes some predecoding functionality. This predecoder gets four thirty-two bit instructions from IS and appends eighteen bits to each instruction to facilitate dispatching. The predecoder then places the predecoded instructions into instruction buffer 74. Fetch stage 252 also performs some branch prediction. Branch prediction occurs in fetch stage 252 with one branch prediction per quadword.

Decode stage 254 accesses instructions from instruction buffer 74 and decodes them to determine the type of instructions they are. Since SMU 10 can process up to four instructions per cycle, it is important to define a mechanism to identify relative order among instructions in each cycle. At the decode stage, dispatch unit 202 scoreboards these instructions to match available resources to requirements of the instructions. Dispatch unit 202 dispatches only those instructions whose resources are available. In the decode stage, register file 52 is accessed by memory instructions to retrieve an address register specifier.

Decode stage 254 determines relative priority among instructions by reading the program counter pointing to the next instruction to be executed. Upon dispatching an instruction, dispatch unit 202 associates the instructions relative priority with a control word dispatched with each instruction.

It is an advantage of the present invention that instruction realignment to source code order in the instruction buffer is not necessary when dispatching less than a quadword from the instruction buffer.

Addressing stage 256 uses address generator 56 to generate load addresses and store addresses.

Execute stage 258 includes a large number of activities. Execution unit 50 completes all integer arithmetic logic unit (IALU) operations in except multiplies and divides (which take many cycles) multiply and div, and all shift, operations in this one cycle multiply and divide operations are committed during the execute stage. Execution unit 50 loads data from DS 54 into register file 52 during execute stage 258. Additionally, integer unit 12 resolves branches, performs TLB lookups, and detects exceptions, all during execute stage 258.

Writeback stage 260 follows execute stage 258 and concludes integer pipeline 250's portion of the pipelines of SMU 10. Successful completion of an instruction during execute stage 258 results in that instruction performing any necessary write into register file 52. Operations and results of exception detection in execute stage 258 qualify conditions when this write into register file 52 can occur. A write into register file 52 is irreversible. Therefore, integer unit 12 allows writes only if an instruction executed properly and no instruction with a higher priority (that is, an instruction that precedes it in the instruction stream) generated any type of exception that was detected during execute stage 258. A more detailed description of exception processing and resolution is provided below.

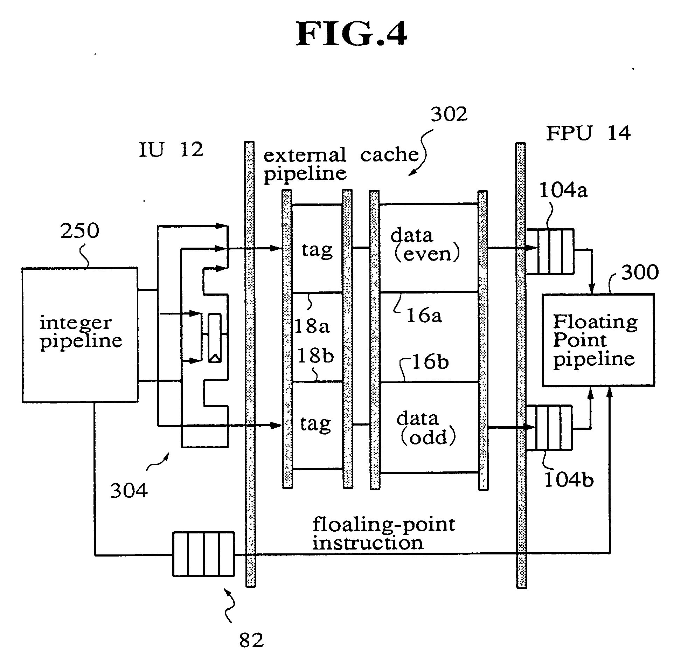

Fig. 4 is a block diagram illustrating a decoupling of a floating-point pipeline 300 portion of the pipeline structure of SMU 10 from integer pipeline 250. The description of Fig. 4 is made with respect to components illustrated in Fig. 2. As described earlier, integer unit 12 provides addressing control information to external cache 16 to access data for floating point unit 14. This means that floating point load and store instructions pass through integer pipeline 250, specifically memory pipeline 210, to TLB 58 to produce a physical address in external cache 16 of the needed data. Datapaths from TLB 58 to external cache 16, and then from external cache 16 to LDQ 104 form an external cache pipeline 302 shown in Fig. 4. External cache pipeline 302 operates in five cycles. In the preferred embodiment, to improve brandwidth, external cache 16 is interleaved. Even addresses are located in a first bank, identified as 16a, while odd addresses are located in a second bank 16b. Tag memory 18 is similarly divided into an even tag memory 18a and an odd memory tag 18b.

External cache pipeline 302 produces data for FPU 14 by loading the data into LDQ 104. Due to the interleaving of external cache 16, LDQ 104 is divided into an even LDQ (LDQE) 104a and an odd LDQ (LDQO) 104b. Integer unit 12 includes an address bellows 304 whose operation is explained in a related patent application entitled CONFLICT RESOLUTION IN INTERLEAVED MEMORY SYSTEM WITH MULTIPLE PARALLEL ACCESSES filed December 15, 1993. The address bellows 304 improved performance of interleavd external cache 302 when two instructions arrive from integer pipeline 250 that need to proceed down the same side of the pipeline. Address bellows 304 can hold one of the instructions, allow the higher priority one to proceed, and issue the held instruction the next cycle.

Integer pipeline 250 does not dispatch instructions into FPQ 82 until all higher order instructions execute and any exception or dependencies are resolved. Once an instruction is sent into FPQ 82, those instructions are committed. Therefore, instructions are not enqueued into FPQ 82 until writeback stage 260.

SMU 10 uses a split-level cache structure as described in the incorporated patent application entitled SPLIT LEVEL CACHE filed December 15, 1993. The use of five-stage external cache 302 presented a problem for floating point instructions: straightforward implementations could prevent dispatching of any floating point instruction for five cycles (or up to twenty instructions) following a floating point load.

Decoupling FPU 14 from integer pipeline 250 hides the five cycle latency of external cache pipeline 302. FPQ 82 is implemented as a first-in, first-out (FIFO) queue. Therefore, a floating point instruction that uses a result of a floating point load instruction can immediately follow the floating point load instruction in FPQ 82. Dispatch unit 202 thus ignores the latency of external cache 302. Thereafter, integer pipeline 250 is immediately free to continue on to other instructions. The load instruction proceeds through memory pipeline 210 to external cache pipeline 302 and deposits the load data into LDQ 104 after five cycles. Until the load data is available in LDQ 104, the floating point load instruction waits in FPQ 82 and issues to FPU 14 when it is ready. The compute instruction waits behind the floating point instruction in FPQ 82 until the load data is loaded into FREG file 102.

The decoupling of the FPU 14 can result in out of order execution of floating point instructions with respect to integer instructions. The latency of external cache pipeline 304 is hidden from integer pipeline 250 by not requiring in order execution of floating point instructions and integer instructions.

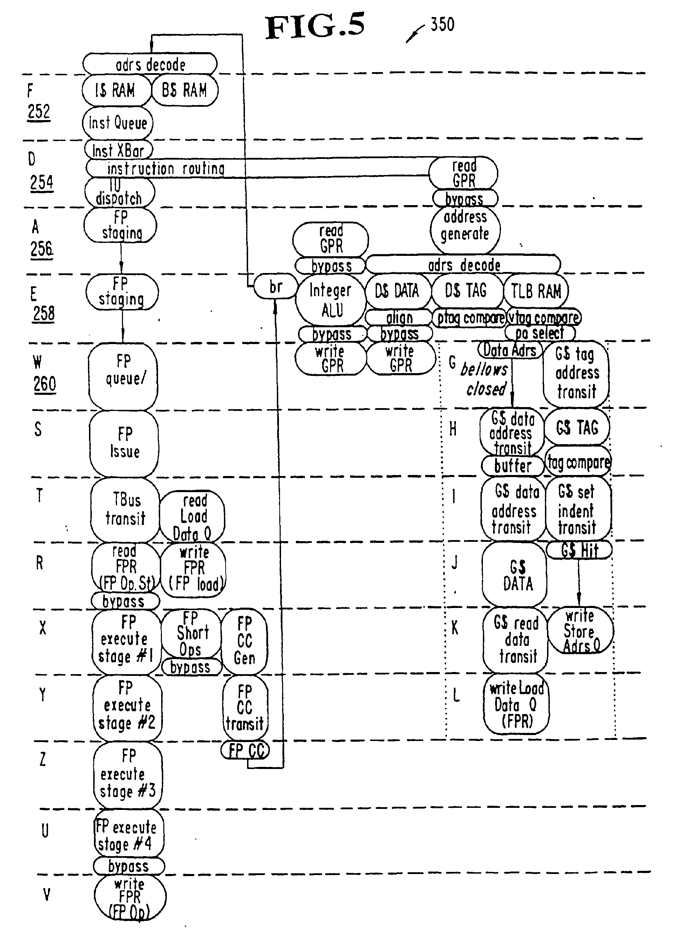

Fig. 5 is a flowchart illustrating a combined pipeline 350 including integer pipeline 250, external cache pipeline 302, and floating point pipeline 300. Combined pipeline 350 identifies integer pipeline 250 stages by the F, D, A, E, & W cycle designations, corresponding to the fetch, decode, addressing, execute and writeback stages. Combined pipeline 350 includes an S stage that represents an extra cycle to issue floating point instructions from FPQ 82. Floating point dispatch occurs at S-stage, based on resource conflicts and register dependencies.

Stages designated G, H, I, J, & K, are part of external cache pipeline 302. Combined pipeline 350 includes an L stage that represents a cycle to write load data into LDQ 104.

Stages designated T, R, X, Y, Z, U, and V define floating point pipeline 300. T stage is a T-bus transit stage to allow time for instructions to pass from the integrated circuit package including integer unit 12 to the integrated circuit package including FPU 14. A full cycle is allowed for chip crossings throughout SMU 10, such as for transits to tag memory 18 and to external cache 16 from integer unit 12.

R stage reads FREG 102 as needed. FPU 14 has four execution stages, X stage, Y stage, Z stage, and U stage. These stages together perform floating point operations. Some complex operations require several passes through the execute stages X-Y while a result is iteratively determined. Finally, V stage writes to FREG file 102 to complete floating point pipeline 300. As described above, floating point pipeline 300 includes resources to concurrently operate on two floating point instructions and two floating point memory instructions per cycle.

### III. Dispatching

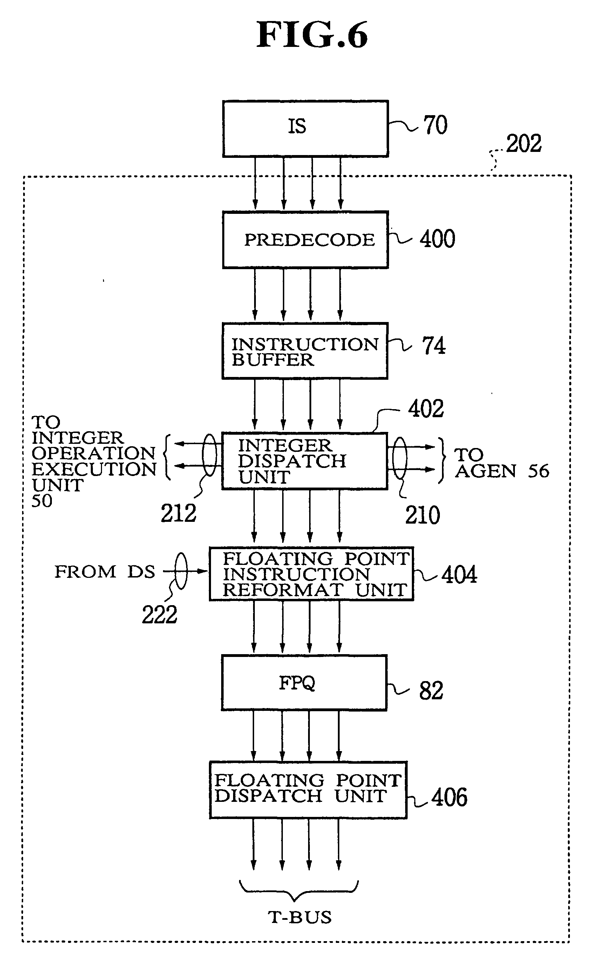

Fig. 6 is a detailed block diagram of dispatch unit 202 shown in Fig. 2. Dispatch unit 202 includes a predecoder 400, instruction buffer 74, an integer dispatch unit 402, a floating point instruction formatting unit 404, a floating point dispatch unit 406, and FPQ 82. Integer dispatch unit 402, floating point pre-packaging unit 404, and floating point dispatch unit 406 together make up dispatch unit 80 shown in Fig. 1.

As described earlier, during fetch stage 252, predecoder 400 reads four instructions at a time from IS 70. Predecoder 400 examines each instruction read from IS 70 for general resource requirements and reformats them to a convenient format for register scoreboarding and resource interlock. There is more time available at this point in the instruction stream to analyze the instructions and to make some preliminary determinations as to resource requirements and to search the individual instructions in order to extract information contained within each instruction. Later, at the decode stage, there is little time available to do some of these functions.

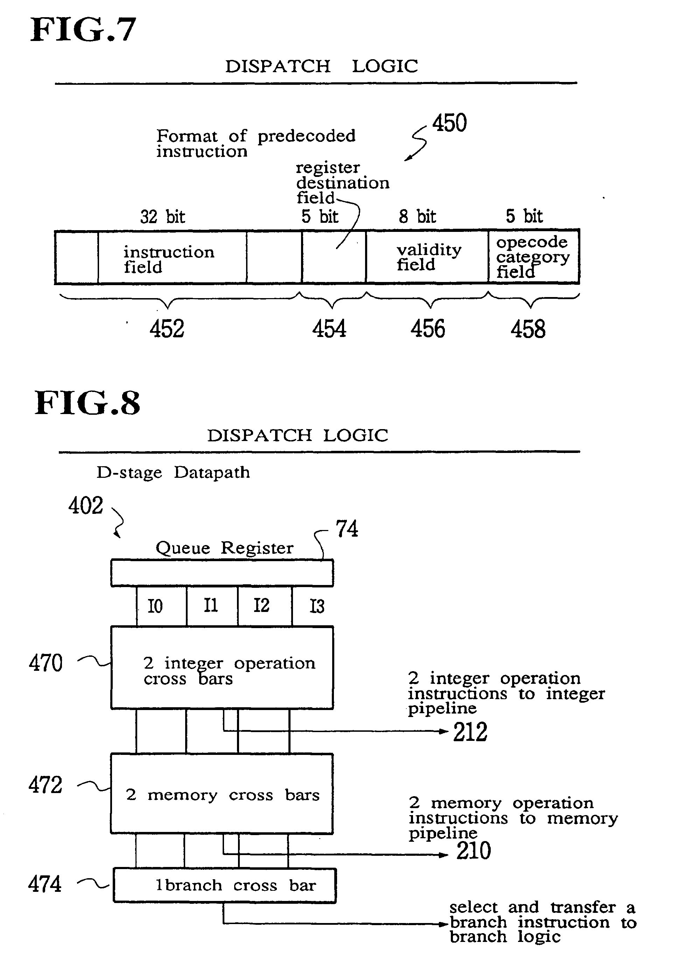

Fig. 7 is a representation of a template for a reformatted instruction 450 after predecoding. Reformatted instruction 450 includes an instruction field 452, a register destination field 454, a validity field 456, and an opcode category field 458. Instruction field 452 is thirty-two bits wide and is the original instruction. Register destination field 254, validity field 456 and opcode category field 458 are the fields that predecoder 400 adds.

There are thirty-two registers available in register file 52, therefore they can each be uniquely identified by a five bit field. Destination register field 454 is a five bit field representing the destination register for the instruction in instruction field 452. The instruction set used for SMU 10 permits the destination register, when it is present, to be in a number of different locations in the thirty-two bits making up each instruction. Thus, locating the destination register during predecoding and putting it in a known location saves much time later. That is one purpose of destination register field 454, to establish a fixed position for this important register value.

Validity field 456 encodes a number of characteristics that the predecoder can derive from the instruction. These individual values of the bits in validity field 456 expedite dispatching in decode stage 254. In the preferred embodiment, validity field 456 includes eight bit positions. These positions correspond to: rd valid, instruction valid, int/fp instruction, int and fp instruction, rs valid, rt valid, predict bit and delay bit.

The rd valid bit is a switch to indicate whether the five bits in the destination register field 454 are valid for the instruction. Some instructions do not have a destination register. Each integer instruction can have up to three registers: the destination register and up to two source registers. SMU 10 defines a first source register as an rs register and a second register as an rt register. Instructions can use either zero, one or two source registers. The rs valid bit in validity field 456 indicates whether or not the instruction uses the rs register. Similarly, the rt valid bit in validity field 456 indicates whether or not the instruction uses the rt register. In the instruction set for SMU 10, it is not necessary to extract the rs and rt registers during predecoding as they are easily located. It is the destination register that can appear in a number of positions in an instruction.

The instruction valid bit indicates to integer dispatch unit 402 whether the instruction is valid or not. The int/fp instruction valid bit indicates to dispatch unit 402 whether or not the associated instruction is a floating point instruction or not, while the int and fp valid bit indicates whether or not the associated instruction is both a floating point instruction and an integer instruction.

Two of the validity bits, the predict bit and the delay bit are used by branch prediction logic. They are not defined by predecoder 400 and are not used by the dispatch system, therefore they will not be further described herein.

Five bit opcode category field 458 broadly groups sets of instructions together according to particular resource requirements or other factors that require that dispatch unit 402 process an instruction, or group of instructions, differently from other instructions. Table I below defines a set of opcodes for use in the integer dispatch unit 402.

**TABLE I**

| Cat Opc | Bit Pattern (4 3 2 1 0) | Description |
|---|---|---|
| mvcfi | 00101 | move control register from CoP1 to int |
| mvfi | 00100 | move register from CoP1 to int |
| shift | 00001 | shift |
| mul | 00011 | multiply |
| mvhl | 00010 | move from/to hi/lo reg |
| fpcmp | 10101 | CoP1 compare |
| ssnop | 00110 | superscalar noop |
| movnz | 00111 | move conditional |
| bccdep | 01011 | branch dependent on cc bits |
| brbit | 01001 | branch instruction |
| mvccdep | 01010 | move dependent on cc bits |
| cop0st | 11100 | CoP1 null instruction |
| sc | 01100 | store conditional |
| ctcl | 11101 | move control register to CoP1 |
| fpmbit | 01111 | FP load/store instruction |
| merge | 01110 | Load left/Load right |
| ldbit | 11110 | load instructions |

In Table I, the Cat Opc is a list of categories for integer opcodes that were chosen for the preferred embodiment. Corresponding to the Cat Opc is a bit pattern appended to an instruction represented by the particular category in the instruction's opcode category field 458. The numbers in the parenthese in the bit pattern heading represent the bit position numbers, with "0" representing the low-order bit number and "4" representing the high order bit number. In the description above, the CoProcessor refers to, in the preferred embodiment, the floating point unit.

Even though the categories of the opcodes were chosen to group instructions together that have similar resource requirements, there are groups of op code categories that share common features. To make the predecoding, and the subsequent decoding and dispatching, as efficient as possible using a minimum amount of appended bits, common characteristics that are significant to resource allocation and that are shared among different categories of opcodes have similar bit patterns. For example, the last six opcode categories all represent memory-type instructions and therefore, bit positions 2 and 3 are set. Only memory-type instructions op code categories will set both bits at positions 2 and 3. Dispatch unit 402 can quickly determine a memory instruction by masking bits 2 and 3 to see if both of these positions are "1". Similarly, there are three branch-type opcode categories: bccdep, brbit, and mvccdep. These instructions all have bit positions 2, 3 and 4 matching "010".

Sorting the instructions into enough different op code categories while maitaining important inter-relatedness can be difficult using a few number of bits. It is undesirable from a cost and speed perspective to needlessly increase a number of bits appended to each instruction.

After predecoding, predecoder 400 enqueues the reformatted and processed instructions into instruction buffer 74. The four instructions taken out of IS 70 totaled 128 bits, while the four instructions stored into instruction buffer 74 total 200 bits. The extra memory requirements for instruction buffer 74 are greatly offset by the performance advantages gained during decode stage 254 from the predecoding.

Fig. 8 is a block diagram of datapath flow through integer dispatch unit 402 illustrated in Fig. 6. Integer dispatch unit 402 includes five crossbars (multiplexers) that receive instructions from instruction buffer 74 (the queue register). These crossbars include two integer operation crossbars 470, two memory crossbars 472, and one branch crossbar 474.

Of the four instructions presented to dispatch unit 402, integer crossbars 470 select a first two integer operations and issues them down integer pipeline 212. Of the two integer operations issued down integer pipeline 212, the higher priority of the two is, by conventon in the preferred embodiment, issued down one of the pipelines referred to as the left pipeline. Thus, crossbars 470 issue the lower priority of the two integer operations down the right integer pipeline in integer pipeline 212.

Memory crossbars 472 selects the first two memory operations from the four presented from instruction buffer 74 and issues them down memory pipeline 210. Memory crossbars 472 issue a higher priority one of the two memory operations down a left memory pipeline and the other down a right memory pipeline.

Branch crossbar 474 selects a first branch instruction and issues it to branch logic. The five crossbars shown in Fig. 8 all operate concurrently and receive the four instructions from instruction buffer 74 in parallel. It may be the case that among the four instructions received from instruction buffer 74, there are more or less than two integer operations and more or less than two memory operations, and more or less than one branch instruction. The crossbars will take less than their maximum if fewer instructions of the appropriate type are available.

SMU 10 is a superscalar processor able to execute up to four instructions each cycle. However, instructions are always executed and issued in order. To enforce in-order processing, for every stage in integer pipeline 250, the instructions in the particular stages have a relative priority. Each instruction has appended to it two priority bits representing this relative priority.

Priority is initially established by an instruction counter associated with instruction buffer 74. This instruction counter continually points to the highest priority instruction among the four instructions presented to dispatch unit 402. As dispatch unit 402 successfully dispatches instructions into the pipelines, the instruction counter advances to point to the highest priority non-dispatched instruction in instruction buffer 74.

In operation, to select the first two integer operations from among the four instructions, integer crossbar responds to the value of the instruction counter. To quickly find integer instructions, dispatch unit 402 finds the first two instructions that are not memory instructions, that are not floating point instructions, and that are valid. The valid bit and the fp/int validity bits of validity field 456 of each instruction indicate those instructions that are valid non-floating point instructions. To further determine whether such an instruction is or is not a memory instruction, dispatch unit 402 masks the second and third bits of the bit pattern in the op code category field of each instruction. As long as those bits are not both "1", the instruction is not a memory instruction. Valid, non-memory, non-floating point instructions are considered integer instructions.

Selection of memory instructions is simpler. As described above, using the instruction counter, the valid bit in validity field 456, and the result of a mask of bit positions 2 and 3 in the op code category field 458, dispatch unit 402 quickly determines the first two memory instructions.

Selection of the highest priority branch instruction to route to branch logic depends upon the instruction counter, the valid bit in validity field 456, and a comparison of a mask of bit positions 2, 3 and 4 with "010". An exact match indicates that the instruction is a branch instruction. An instruction sent to branch logic also is dispatched to another one of the pipelines.

Timing is critical in decode stage 254, especially for memory instructions. It is important that memory instructions get dispatched as soon as possible to register file 52 to access information used in address generation in the very next cycle. Therefore, dispatch unit 402 exposes instructions to the pipelines before determining or resolving resource contentions. In response to this, dispatch unit 402 is able to issue kill control signals for each instruction. This kill signal will be asserted for those instructions that should not have been dispatched. The instruction counter will only advance to correspond to instructions successfully dispatched. In other words, if for some reason no instructions should have been dispatched in a given decode cycle, dispatch unit 402 issues a kill signal for each dispatched instruction. The instruction counter does not advance in this case.

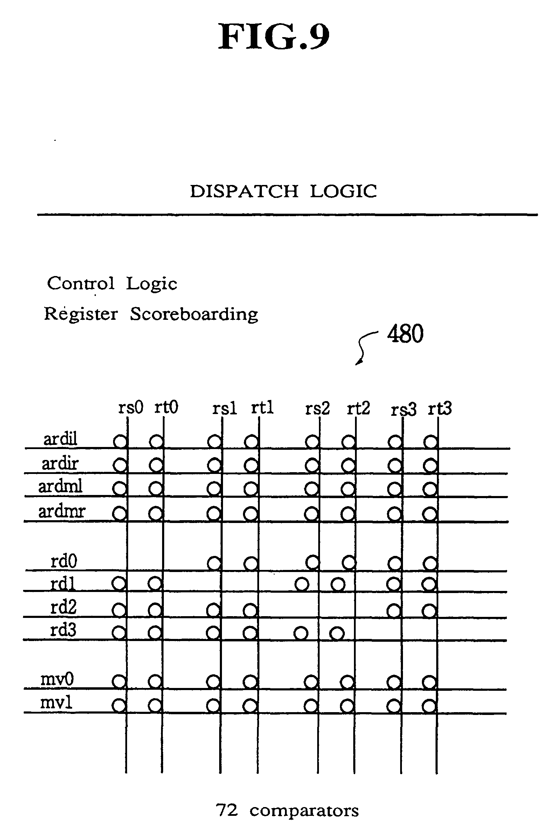

Dispatch unit 402 determines a status of the kill control signals based in part upon results of register scoreboarding. Fig. 9 is a schematic representation illustrating use of a register scoreboard 480 to establish and resolve resource contention. Register scoreboard 480 is an array illustrating necessary comparisons to prevent improper access of registers in register file 52. Across the top of the array are placed five bit values of the two source registers in each of the four instructions, for a total of eight lines across the array.

Down the array are placed five bit values of various registers that dispatch unit 402 will use to compare against the values for the source registers arrayed across the top. The registers down the array include the four destination register values from the destination register field 454 of each of the four instructions. Additionally, register scoreboard 480 uses the values of the destination registers for the instructions issued in the immediately preceding cycle. These register values are labelled ardil, ardir, ardml, and ardmr. Instructions dispatched in the immediately preceding cycle would be in address stage 256. Thus, ardil means the destination register of the instruction in the left integer pipe located at the address stage. Similarly ardir is the right integer pipe destination register, while ardml and ardmr refer to destination register at the address stage of the left and right memory pipe, respectively.

There is also a move instruction that takes data from the FPU 14 and loads it into a register in register file 52. This process can take a long time, therefore the register to receive the data is scoreboard. There can be two of these move instructions pending at any particular time, with mv0 storing the destination register of the first move instruction and mv1 storing the destination register of the second move instruction.

To implement register scoreboard 480, there are eight registers for storing five bit values of the source registers identified in the four, or fewer, instructions dispatched in the present decode cycle. Associated with each register is the corresponding valid bit from validity field 456 of each instruction. There are ten registers for holding the five bit values identifying the destination registers of the four dispatched instructions, the four previously dispatched instructions, and the two move instructions. These registers holding destination register information also have a validity bit associated with them (taken from the rd valid bit of validity field 456).

In Fig. 9, comparisons between destination registers and source registers are made in those instances wherein a circle appears at the intersection of the array. For example, a comparison is made to see if the destination register for the first instruction (rd0) is to be used as a source register for instructions 2, 3 or 4. For register scoreboard 480, up to seventy-two comparisons of five bit values are made each cycle. Dispatch unit resolves conflicts by allowing higher priority instructions to use the register while stalling later instructions requesting access to a busy resource. To stall a dispatched instruction, dispatch unit 402 issues a kill signal corresponding to instructions that it wants to stall.

One reason that dispatch unit 402 scoreboards destination registers of instructions in the integer pipeline at address stage 256 is to guard against an add to a register followed immediately in the next cycle by a load using that register for address. Reserving registers to receive a move from FPU 14 ensures that FPU 14 will not have to wait. It is a design of SMU 10 to not have functional units wait after completing an operation.

Dispatch unit 402 uses more information than just the results of register scoreboard 480 to decide which instructions it should properly dispatch. It is one goal of dispatching to ensure that instructions are dispatched in order with resource conflicts cleared. For integer unit 12, the resource limitations include: availability of only one multiplier, one shifter, two destination registers for mvfti (move floating point register to integer), no special write port to register file 52 for mvfti, and cc (condition code) bits being busy for those ccbits dependent instructions. For example, as only one shift instruction can be dispatched per cycle, a second shift instruction in a group of four instructions has to wait until the shifter becomes available.

Dispatch unit 402 also has a number of conditions that kill all integer dispatch. These conditions include: gflsh (queue flush) following a branch misprediction or exception, debug mode, floating point queue full, and memory pipes being in a condition that they are unable to handle more memory operations.

There are also contentions to be resolved for memory instructions. These contentions include: only one read port to DS 54, the write timing to DS 54, only one register write port for integer stores and merge instructions, integer store, mvitf and mvcitf require a whole entry in FPQ 82 because they carry their data along with the instruction, sc goes by itself, and mvcitf goes by itself to make cc bit logic simpler as it sets all cc bits in the FPU 14.

These integer and memory contentions can further limit instruction dispatching by dispatch unit 402 so that fewer instructions are actually dispatched in a cycle than might otherwise be dispatched based solely on results of register scoreboard 480.

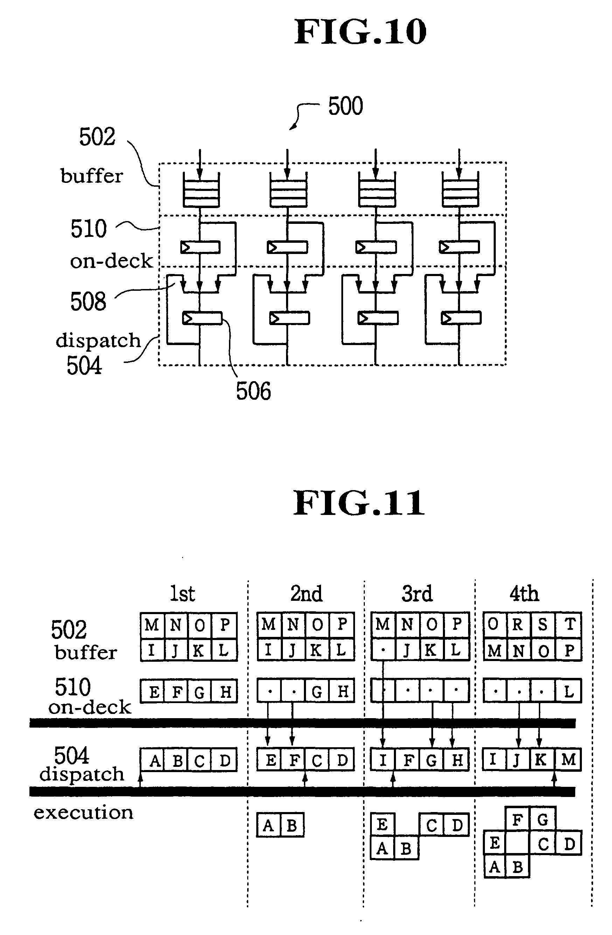

Fig. 10 is a simplified block diagram of a fetch and dispatch system 500 according to the preferred embodiment. Four thirty-two bit instructions fetched into a buffer queue 502. Incoming instructions are naturally aligned on 128-bit boundaries and outgoing instructions are always contiguous. Instructions fetched into buffer queue 502 are quadword aligned and come into the top of buffer queue 502 from an instruction cache (not shown). A dispatch unit 504 controls dispatching of instructions and includes dispatch registers 506 and a selector circuit 508. A group of on-deck registers 510 couple an output of buffer queue 502 to dispatch unit 504.

The dispatch registers 506 function as traditional "instruction registers" connected to decoders and register files. The dispatch registers 506 are either recirculated, refilled from on-deck register 510, or directly from the output of buffer queue 502. Buffer queue 502 includes a bypass (not shown) to provide a direct path from the instruction cache to the dispatch registers.

Fig. 11 is an illustration of operation of an instruction queue such as that shown in Fig. 10 taken over four cycles. Initially in the first cycle, buffer queue 502, on-deck registers 510 and dispatch registers 504 are filled with instructions named by letters and ordered to execute in descending alphabetical order. The instruction pointer initially points to instruction "A".

In the first cycle, dispatch logic determines that of the first four potentially parallel instructions "A" to "D", only "A" and "B" can execute concurrently. (For example, "C" could be dependent on "A" therefore it cannot be dispatched. An inability to dispatch "C" also requires that "D" not be dispatched because the system does in-order dispatching.

Thereafter, in the second cycle, signals from the dispatch logic advance "E" and "F" from on-deck registers 510 to dispatch registers 504 and hold "C" and "D". Instruction counter points to "C" as the highest priority instruction, with priorities assigned to "D" to "F" starting at "C". In the second cycle, instructions "C" to "E" are dispatched with "F" holding.

Thereafter, in the third cycle, instructions "G" and "H" are moved from on deck register 510 into dispatch register 504. However, "I" is accessed directly from buffer queue 502. The depletion of all instructions from on-deck register 510 triggers advancement of buffer queue 502 and a fetch of additional instructions. Advancement did not occur until the fourth cycle, yet dispatch register 504 was properly filled directly from buffer queue 502. This direct connection illustrates how the fetch pipeline is decoupled from the dispatch decision logic. The dispatch logic need only manipulate selectors 508 feeding each of the dispatch registers.

Thereafter, in the fourth cycle, the buffer queue 502 advancement and the filling of dispatch registers 504 are simultaneous, achieving continuous alignment-free instruction dispatching (no realignment of instructions in source code order).

The following description refers again to Fig. 6. At the end of decode stage 254, up to two integer instructions go to the integer pipelines, and up to two memory instructions go to the memory pipelines. Floating point instructions are not scoreboarded or processed in dispatch stage 254, they just flow through integer dispatch unit 402 to floating point instruction processing unit 404. During address stage 256, floating point instructions are again reformatted conveniently for floating point dispatch.

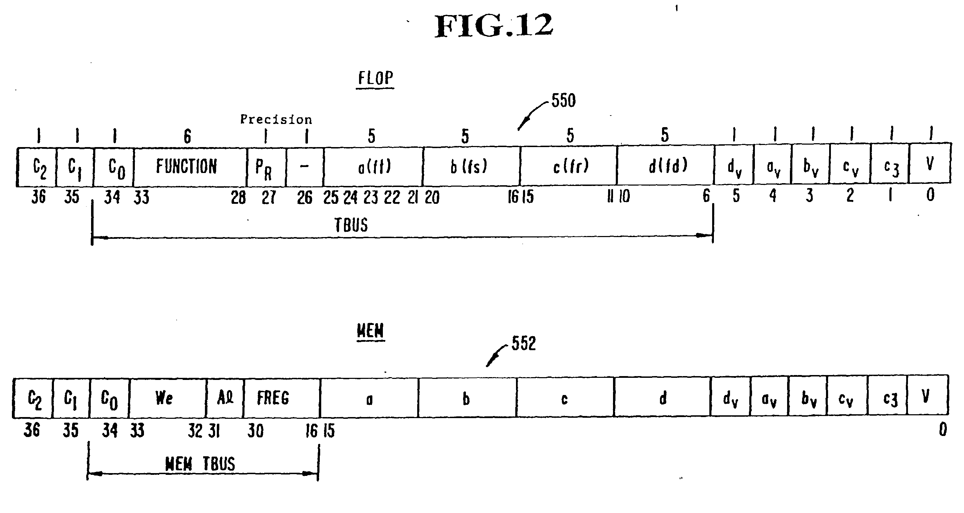

Fig. 12 is a representation of a template for a reformatted floating point operation instruction 550 and a template for a reformatted floating point memory operation 552 after reformatting. Reformatting of floating point instructions results in instructions thirty-seven bits wide.

During execute stage 258, the reformatted floating point instructions are rotated in source order. Thereafter, quadwords that contain instructions relevant to floating point issue are written to FPQ 82. Floating point dispatch unit 406 controls dispatching of fp relevant instructions according to resource contention and register scoreboarding similar to dispatching in decode stage 254. Note that only a portion of the reformatted instruction are actually sent out on to the T-bus linking integer unit 12 to FPU 14. As shown in Fig. 12, twenty-nine bits of reformatted floating point operation instruction 550 are sent to the T-bus, while only nine bits of reformatted floating point memory instruction 552 are sent to the T-bus.

Table II shows floating point opcodes and the associated four-bit value representing that opcode category. There are fewer categories so floating point dispatch (S cycle or FD stage) operations require only a four-bit tag. Again, the categories emphasize the different resource requirements. Two broad sub-classes are illustrated in Table II: floating point memory instructions and floating point execution instructions. The higher bit of the opcode identifies the subclass. A "0" in bit position 3 indicates a memory instruction while a "1" indicates a floating point execution instruction.

One difficulty with the floating point instruction dispatch logic is scoreboarding the floating point execution instructions. The different opcodes of the floating point execution instructions highlight latency differences among them. That is what long in the opcode section of Table II below referenced by the "1000" bit pattern; instructions in this category take many cycles to complete. Although FPU 14 includes two symmetric pipelines for execution, the different latencies of these instructions makes scoreboarding much more complex.

**TABLE II**

| OPCODE CATEGORY | BIT PATTERN (3 2 1 0) | DESCRIPTION |
|---|---|---|
| fp load | 0100 | fp mem instruction |
| fp store | 0101 | fp mem instruction |
| int store | 0001 | fp mem instruction |
| move from fpr | 0010 | fp mem instruction |
| move from ctl (control) | 0011 | fp mem instruction |
| move to fpr | 0110 | fp mem instruction |
| move to ctl | 0111 | fp mem instruction |
| long | 1000 | fp ex instruction |
| reg copl | 1010 | fp ex instruction |
| short | 1100 | fp ex instruction |
| move | 1101 | fp ex instruction |
| comp | 1110 | fp ex instruction |
| reg copl X | 1011 | fp ex instruction |

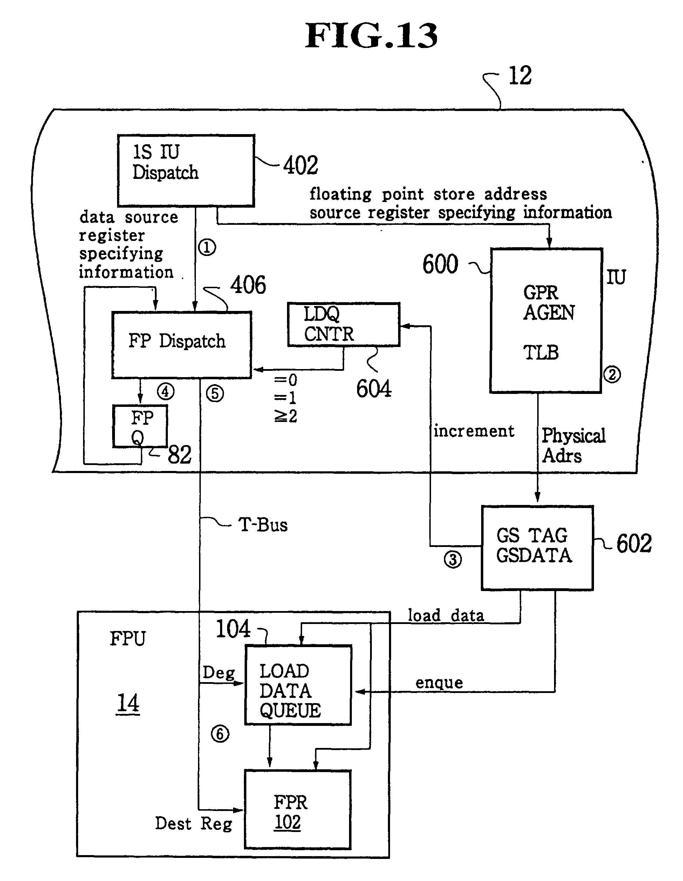

Fig. 13 is a schematic diagram illustrating dispatching in SMU 10 to perform a floating point load operation. Register file read, address generation and TLB lookup functions for integer unit 12 are included in an address unit 600. The external cache pipeline functions of tag memory access and GS data access are included in a global cache (GS) access unit 602. GS access unit 602 provides read data to both LDQ 104 and FPR 102. Additionally, GS access unit 602 asserts an enqueue signal to LDQ 104 when data is available from GS 16.

Integer unit 12 also includes a load queue counter (LDQ counter) 604. LQQ counter 604 responds to an increment signal from GS access unit 602 that indicates when there is a hit in GS tag memory. LDQ counter 604 provides an output to FP dispatch unit 406. The output has three states: zero, one, or >= 2.

The floating point load instruction begins at the IS IU dispatch unit 402. Integer dispatch unit 402 issues this instruction to both the integer pipeline (address unit 600) and to the floating point pipeline (FP dispatch unit 406). Address unit 600 generates a virtual address and translates it into a physical address. Address unit 600 provides this physical address to GS access unit 602.

When GS access unit detects a GS tag hit, integer unit 12 knows that corresponding data will be available so it asserts the increment signal to LDQ counter 604, incrementing it to a value of one. GS access unit 602 writes the data into LDQ 104 when it is available by asserting the enqueue signal to LDQ 104.

FP dispatch unit 406 holds the floating point load instruction in FPQ 82 during the address generation and data access cycles. When LDQ counter 604 indicates that data for the floating point load operation is available in LDQ 104, FP dispatch unit 406 dispatches the instruction over the T-bus to FPU 14. FPU 14 reads the data from LDQ 104 and writes it into FPR 102.

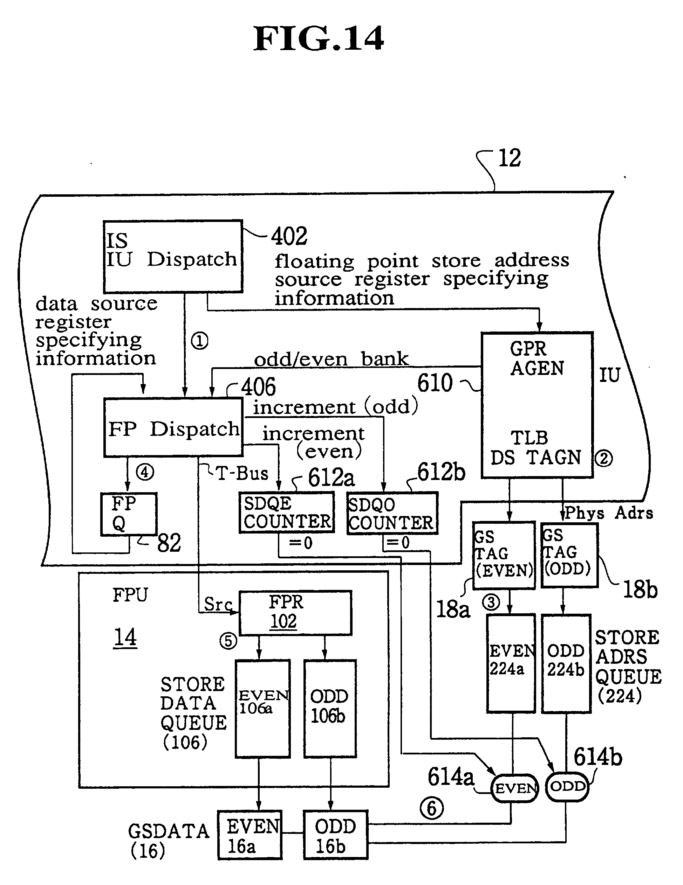

Fig. 14 is a schematic diagram illustrating dispatching in SMU 10 to perform a floating point store operation. Integer unit 12 includes a store address generation unit 610 that includes register file 52, address generators 56, TLB 58 and DS tag/validity data. A store data queue counter (SDQ counter) 612 (physically implemented as two counters - a SDQ counter for even addresses (SDQE counter 612a) and a SDQ counter for odd addresses (SDQO counter 612b) for determining a status of STQ 106 on FPU 14. SDQ counters respond to increment signals from FP dispatch unit 406 to increment their stored values. FP dispatch unit 406 receives a signal from store address generation unit 610 to indicate to which bank a store will be made.

The floating point store instruction begins at IS integer dispatch unit 402. Dispatch unit 402 dispatches the floating point store instruction to both store address generation unit 610 and to FP dispatch unit 406. Store address generation unit 610 receives the floating point store instruction and any address source register specifier. FP dispatch unit 406 receives a data source register specifier.

Store address generation unit 610 determines a virtual address and translates it into a physical address. DS 54 includes a tag memory and valid memory (not shown) that are checked to ensure consistency between DS and GS. Store address generation unit 610 provides a physical address to GS tag 18 and asserts an even/odd bank signal (as appropriate) to FP dispatch unit 406.

A hit in GS tag 18 enqueues the store address in store address queue 224. External cache control logic 614 checks a status of the appropriate SDQ counter 612 to determine whether data is available in STQ 106 on FPU 14.

FP dispatch unit 406 does not issue the floating point store instruction until normal instruction and resource dependencies permit dispatch of the instruction. Upon receiving the store instruction, FPU 14 reads data from FPR 102 and enqueues it in STQ 106. STQ counter 612 is incremented to indicate that data is available in STQ 106. Thereafter, when an entry in SDQ 106 matches an entry in address queue 224, the external cache control logic 614 dequeues the data and is sent to external cache 16.

### IV. Pipeline Refill and Exception Processing

The description above described the pipeline operation in its preferred mode of operation with instructions being continually fetched, decoded and executed. There are a number of situations that arise during operation of a pipelined superscalar processor that can cause a discontinuity in operation of a pipeline. Generically, these situations are referred to in the preferred embodiment as exceptions, meaning that their execution causes, or caused, SMU 10 to operate the pipelines in a special fashion.

The methodology employed by SMU 10 to handle exceptions is called exception processing. In the preferred embodiment, SMU 10 expands the concept of exception processing to cover events and situations not classically defined as exceptions and provides a universal system for handling all types of events. Exception processing logic coupled to virtually all of the functional units of SMU 10 monitor and control exception processing.

SMU 10 not only includes traditional integer unit exceptions among the class of exceptions it processes, but includes data cache misses, TLB exceptions, floating point instruction exceptions, branch misprediction, system calls and returns from exception processing among the class of recognizable exception situations. SMU 10 provides a common exception handling paradigm for the exceptions.

The exception handling process is complex due to the superscalar nature of SMU 10. In the preferred embodiment, SMU 10 handles all exceptions in execute stage 258. It is necessary to detect exceptions prior to writeback stage 260 because writes into register file 52 are irreversible. SMU 10 also resolves all exceptions related to higher priority instructions that precede a floating point instruction prior to dispatching that floating point instruction into FPQ 82.

Another factor adding to complexity of the exception processing system includes the use by SMU 10 of a continually advancing pipeline. The pipelines of SMU 10 never stop, but advance instructions each cycle. Due to the speed of the pipelines, the short amount of time available after exceptions are detected during the execute stage 258, and the large chip size, halting the pipeline by issuing stop instructions to all parts of SMU 10 would be impractical.

For integer instructions, exception processing uses a precise model. For floating point instructions, the decoupling of the high latency of external cache pipeline 302 from integer pipeline 250 results in SMU 10 employing an imprecise exception processing model for floating point instructions.

The precise model requires that SMU 10 identify precisely an instruction that causes an exception. SMU 10 employs a program counter at execute stage 258, and uses priority bits appended to each instruction, to identify a particular instruction causing the exception. The two bit priority code appended to each instruction indicates relative priority among instructions in the same stage of the pipeline.

The priority bits also perform a second function. When an exception occurs, SMU 10 allows all instructions having a priority higher than the instruction causing the exception to complete, and cancels the exception causing instruction, as well as all lower priority instructions.

Not only is the exception instruction, as well as lower priority instructions, tagged to prevent them from advancing to the next stage and changing the stage of any memory locations, effects of these canceled instructions that occurred during execute stage 258 must be canceled.

One particular operation that is more difficult than the others to cancel is a store to DS 54. During execute stage 258, after an instruction stores to DS 54, an instruction with a higher priority can generate an exception. In this case, the store to DS 54 needs to be canceled.

To further explain the cancellation procedure, some additional details regarding DS operation are described. DS 54 is a direct mapped cache storing 16KB of data with 32 byte lines. DS 54 includes a tag memory and a validity bit memory. There is one validity bit associated with each word in DS 54. The validity bit of DS 54 was described with respect to the split-level cache. SMU 10 uses this same validity bit to assist in the cancellation of a DS store.

SMU 10 always stores to the data area of DS 54 before it is known whether there is a hit in tag memory of DS, and what is being overwritten. In the case that there is a DS tag miss, the exception processing logic will treat the miss as an exception and process it as described below.

In the case that an exception occurs from a higher priority instruction, the exception processing logic must cancel the store, even if there was a DS tag hit. To correct the DS write, the exception processing logic clears the validity bit associated with the stored data word, thereby invalidity the data. It no longer matters what data was stored in that storage location prior to the out-of order store. A subsequent attempt to read from that location will generate a DS miss, causing the location to be read from external cache 16 (and generate an exception). A subsequent write to that location will store its data and set the associated validity bit, marking the data as valid.

After an exception, dispatch unit 202 flushes integer pipeline 250 for two to three cycles. During the time that the flushing occurs, the exception processing logic is able to review what, if anything, happened to DS 54, and to make any needed corrections at that time.

The following is a description of the different types of exceptions, as well as a description of steps for handling those instructions. The exceptions are dealt with in order: integer unit exceptions, TLB exceptions, FPU 14 execution unit exceptions, IS miss, and DS tag miss.

Integer unit exceptions typically occur in integer unit 50, such as an overflow. Upon detecting the exception, SMU 10 immediately initiates exception processing. The first step identifies which instruction among the four possible instructions in execute stage 258 caused the exception. Identification of this instruction results when the functional unit that detects the exception reports the two-bit priority code from the associated instruction. The report is made to the exception processing logic.

In the case when there are multiple instructions in execute stage 258, it is possible that more than one instruction causes an exception. The processing logic selects the highest priority instruction causing an exception as the exception instruction, allows any instructions with higher priority to complete, and cancels the exception instruction and all lower priority instructions.

To cancel an instruction, it is only necessary to inhibit that instruction from making an irreversible change to any memory location. Therefore, the exception processing logic disables canceled instructions from writing into the register files. To disable an instruction from writing into the register file, the exception processing logic clears a validity bit of the instruction (i.e., invalidates the instruction).

The register file will not be changed in response to an instruction having a cleared validity bit. This validity bit is different from the instruction valid bit in the validity field appended to each instruction during the fetch stage. It is a one-bit code associated with each instruction to indicate its validity to the stages of SMU 10 (i.e., whether any particular stage can process the instruction). Because the pipeline continues to advance each cycle, an instruction that is not selected by a subsequent stage gets overwritten and disappears from the pipeline.

Not only does the exception processing logic prevent writes into the integer register file, it prevents the exception instruction and all lower priority instructions from being written into FPQ 82, and from entering external cache pipeline 302. Additionally, the exception processing logic sends a signal to dispatch unit 202 indicating the existence of an exception condition. Dispatch unit 202 stops dispatching all instructions until notified that it can start again.

There is a program counter associated with execute stage 258 that determines the program code number for the exception instruction by using the reported priority code and adding that number to the program counter. This program code number for the exception instruction is an exception program counter (EPC). The EPC is sent to the logic that controls instruction buffer 74 and instruction cache 70. Instruction buffer 74 advances its instruction counter to point to the exception instruction as the next instruction.

In the case of an integer execution unit exception IS 70 fetches instructions from an exception handling vector in order to process the exception. Once the instructions from the exception handling vector are fetched and ready for dispatch, dispatch unit 202 resumes dispatching to process the exception. Completion of the exception handling process, an exception condition in its own right, resumes "normal" operation of SMU 10. For some types of exceptions, processing will resume with the exception instruction, while for others, SMU 10 processes a completely different set of instructions. Thus, the integer execution unit instruction exception is handled by canceling effects of the instruction and subsequent instructions, dispatching and executing exception handling vector instructions, and resuming operation.

The exception processing logic handles TLB exceptions in much the same way. A TLB exception occurs when TLB 58 is unable to lookup a physical address corresponding to a virtual address generated by address generator 56. SMU 10 can still determine the physical address, but it will require a few cycles to do so. In response to the TLB exception, the exception processing logic identifies the instruction causing the TLB exception as the exception instruction. It, and any lower priority instructions, are canceled with higher priority instructions committed and allowed to complete.

The EPC reported to instruction buffer 74 points to the instruction causing the TLB exception. While there is no error, per se, in the case of the TLB exception, TLB refills are handled by a software routine. When refill is complete, program execution resumes back where the TLB exception was taken, see application entitled VARIABLE PAGE SIZE TRANSLATION LOOKASIDE BUFFER filed December 15, 1993. The instruction counter simply points to the instruction on causing the TLB exception, causing dispatch unit 202 to try and dispatch it. Until TLB 58 is ready, the instruction counter will not move, causing dispatch unit 202 to continually dispatch the instruction. As soon as the physical address is available, normal operation resumes.

The exception processing logic handles floating point execution exceptions similarly to the way it handles integer unit execution exceptions, with one caveat. As mentioned, SUM 10 employs an imprecise exception model for floating point instructions. Therefore, when an exception occurs, the program counter does not point to the instruction generating the exception. Therefore, to process the floating point instruction exception, the exception processing logic reports the current value of the program counter and the type of exception.

All instructions are canceled, dispatch unit 202 flushes integer pipeline 250, and IS 70 fetches appropriate instructions from an error handling vector appropriate to the type of instruction. The error handling routine must deal with the lack of information regarding the precise instruction generating the floating point error. A floating point exception typically terminates program execution and finishes with an error code, though particular functionality is dependent upon the software exception handler.

For IS misses and DS misses no error has occurred but these are handled the same way as an exception would be handled, i.e., the pipeline is flushed and new instructions are fetched. On an IS miss the instruction fetching is held up until the new IS line can be brought in, then instruction dispatching is resumed. On a DS miss, instruction fetching is immediately resumed at the instruction that caused the DS miss, but dispatching is held up until the new DS line can be brought in.

Advantages of the present system derive from the system's ability to quickly (within one cycle) resolve exceptions, precisely identify the particular exception instruction, and allow higher priority instructions to complete. Consider the instruction stream shown in Table III below:

**TABLE III**

| Instr. Order | Instruction | Exception? |
|---|---|---|
| 1 | ADD | NO |
| 2 | ADD | NO |
| 3 | LOAD | NO |
| 4 | LOAD | YES |
| 5 | ADD | ??? |
| 6 | ADD | ??? |
| 7 | LOAD | ??? |
| . . . | . . . | . . . |

The instructions are ordered with the highest priority at the top. Dispatch unit 202 issues the first four instructions. In the course of executing instruction number four, a DS 54 miss occurs. The exception processing logic permits instructions one, two and three to complete. After handling the DS miss of instruction four, dispatch unit dispatches instructions four, five, six seven, NOT just instruction four by itself. After an DS exception, dispatching retrieves instructions from instruction buffer 74 in order beginning from the new instruction.

### V. Conclusion

In conclusion, the present invention provides a simple, efficient solution to a problem of instruction dispatch and exception processing in a superscalar multiprocessor. While the above is a complete description of the preferred embodiments of the invention, various alternatives, modifications, and equivalents may be used. For example, the reference herein to the preferred embodiment's use of a floating-point coprocessor should not limit the claimed invention to just that one type of coprocessor. As well known in the art, other coprocessor types are available. Some of the floating point specific design elements could be replaced by specific design features customized to another coprocessor-type. Therefore, the above description should not be taken as limiting the scope of the invention which is defined by the appended claims.

## Claims

1. An instruction dispatching method for superscalar microprocessor (10) having an instruction decode stage (254) following an instruction fetch stage (252), comprising the steps of:
predecoding (400) a first fetched instruction (450) prior to said first fetched instruction (450) being advanced to the instruction decode stage (254) by appending a first field (454) and a second field (458) to said fetched instruction (450) wherein said first field (454) includes resource information extracted from said fetched instruction and said second field (458) includes a resource categorization field identifying a class of resources used by instructions of a type similar to said fetched instruction; and thereafter
dispatching said fetched instruction (254) after advancing it to the instruction decode stage (254) to produce a decoded instruction,
said dispatching step (202) using said second field (458) to route said decoded instruction to a functional unit for processing.

2. The method of claim 1, wherein said first field comprises a first destination register information field (454) from the first instruction located at a first relative location in said first instruction, and where said instruction dispatching method further comprises the steps of predecoding a second instruction prior to the decode stage by extracting a second destination register information field from said second instruction located at a second relative location different from the relative location of said first destination register information field appended to said first instruction and appending said second destination register information field to the second instruction at said predetermined location relative to the second instruction; and thereafter
extracting, at the decode stage, a first source register information field from said first instruction;
extracting, at the decode stage, a second source register information field from said second instruction; and thereafter
comparing said first register destination information field with said second source register information field; and
comparing said second register destination information field with said first source register information field.

3. The method of claim 1, wherein said resource categorisation field comprises resource identification tags (458) that identify resource requirements of an instruction (450) in an instruction set to a dispatching unit (202) of a microprocessor which resource identification tags (458) are provided by the steps of:
specifying a plurality of resource classes of resource allocation limitations of the microprocessor that are mutually exclusive of each other;
associating each instruction of the instruction set with an appropriate one of said plurality of resource classes;
identifying a resource set for a first one and a second one of said plurality of resource classes sharing a common dispatching characteristic; and
assigning a unique binary value to each of said plurality of resource classes, wherein said binary values of said first one resource class and said second one resource class share a mask pattern identifying said resource set wherein only instructions in said resource set include said mask pattern.

## Patentansprüche

1. Befehlsabsendeverfahren für einen superskalaren Mikroprozessor (10), welcher eine Befehlsdekodierstufe (254) aufweist, welche einer Befehlsabrufstufe (252) folgt, die Schritte umfassend:
Vordekodieren (400) eines ersten abgerufenen Befehls (450), bevor der erste abgerufene Befehl (450) zu der Befehlsdekodierstufe (254) gefördert wird, durch anfügen eines ersten Feldes (454) und eines zweiten Feldes (458) an den abgerufenen Befehl (450), wobei das erste Feld (254) Ressourceninformation, die aus dem abgerufenen Befehl extrahiert wird, enthält und das zweite Feld (458) ein Ressourcenkategorisierungsfeld enthält, das eine Klasse von Ressourcen identifiziert, die von Befehlen von einem Typ, der ähnlich ist zu dem abgerufenen Befehl, verwendet wird, und danach
Absenden des abgerufenen Befehls (254), nachdem es zu der Befehlsdekodierstufe (254) gefördert wurde, um einen dekodierten Befehl herzustellen, wobei
der Absendungsschritt (202) das zweite Feld (458) verwendet, um den dekodierten Befehl zu einer Funktionseinheit zum Verarbeiten zu leiten.

2. Verfahren nach Anspruch 1, wobei das erste Feld ein erstes Zielregisterinformationsfeld (454) des ersten Befehls umfasst, das sich an einem ersten relativen Ort in dem ersten Befehl befindet und, wobei das Befehlsabsendungsverfahren ferner die Schritte umfasst, Vordekodieren eines zweiten Befehls vor der Dekodierstufe, durch Extrahieren eines zweiten Zielregisterinformationsfeldes des zweiten Befehls, das sich an einem zweiten relativen Ort, der anders ist als der Ort des ersten Zielregisterinformationsfeldes, befindet, das an den ersten Befehl angefügt ist und Anfügen des zweiten Zielregisterinformationsfeldes an den zweiten Befehl an dem vorbestimmten Ort relativ zu dem zweiten Befehl; und danach
Extrahieren, an der Dekodierstufe, eines ersten Quellenregisterinformationsfeldes des ersten Befehls;
Extrahieren, an der Dekodierstufe, eines zweiten Quellenregisterinformationsfeldes des zweiten Befehls; und danach
Vergleichen des ersten Registerzielinformationsfeldes mit dem zweiten Quellenregisterinformationsfeld; und
Vergleichen des zweiten Registerzielinformationsfeldes mit dem ersten Quellenregisterinformationsfeld.

3. Verfahren nach Anspruch 1, wobei das Ressourcenkategorisierungsfeld Ressourcenidentifizierungskennzeichen, die den Ressourcenbedarf von einem Befehl (450) in einem Befehlssatz zu einer Absendeeinheit (202) von einem Mikroprozessor umfasst, wobei die Ressourcenidentifizierungskennzeichen (458) durch die Schritte bereitgestellt werden:
Festlegen einer Vielzahl von Ressourcenklassen von Ressourcenzuteilungsbeschränkungen des Mikroprozessors, die sich gegenseitig ausschließen;
in Verbindung bringen jedes Befehls des Befehlssatzes mit einer Angemessenen von der Vielzahl von Ressourcenklassen;
Ermitteln eines Ressourcensatzes für eine Erste und eine Zweite der Vielzahl von Ressourcenklassen, die eine gemeinsame Absendungscharakteristik teilen; und
Zuteilen eines eindeutigen binären Wertes zu jeder von der Vielzahl von Ressourcenklassen, wobei die Binärwerte von der ersten Ressourcenklasse und der zweiten Ressourcenklasse ein Maskenmuster teilen, das den Ressourcensatz identifiziert, wobei nur die Befehle in dem zweiten Ressourcensatz dieses Maskenmuster enthalten.

## Revendications

1. Procédé de distribution d'instructions pour un microprocesseur superscalaire (10) ayant un étage (254) de décodage d'instructions qui suit un étage (252) de recherche d'instructions, comprenant les étapes consistant à:
pré-décoder (400) une première instruction recherchée (450) avant que ladite première instruction recherchée (450) ne soit avancée vers l'étage (254) de décodage d'instructions en annexant un premier champ (454) et un deuxième champ (458) à ladite instruction recherchée (450) où ledit premier champ (454) comporte des informations de ressources extraites de ladite instruction recherchée et ledit deuxième champ (458) comporte un champ de catégorisation de ressources identifiant une classe de ressources utilisée par des instructions d'un type identique à ladite instruction recherchée; et par la suite
distribuer ladite instruction recherchée (254) après son avancement vers l'étage (254) de décodage d'instructions afin de produire une instruction décodée,
ladite étape de distribution (202) utilisant ledit deuxième champ (458) afin d'acheminer ladite instruction décodée vers une unité fonctionnelle pour exécuter un traitement.

2. Procédé de la revendication 1, dans lequel ledit premier champ comprend un premier champ (454) d'informations de registre de destination à partir de la première instruction située au niveau d'un premier emplacement relatif dans ladite première instruction, et où ledit procédé de distribution d'instructions comprend en plus les étapes consistant à pré-décoder une deuxième instruction avant l'étage de décodage en extrayant un deuxième champ d'informations de registre de destination de ladite deuxième instruction située au niveau d'un deuxième emplacement relatif différent de l'emplacement relatif dudit premier champ d'informations de registre de destination annexé à ladite première instruction et annexer ledit deuxième champ d'informations de registre de destination à la deuxième instruction au niveau dudit emplacement prédéterminé relatif à la deuxième instruction; et par la suite
extraire, au niveau de l'étage de décodage, un premier champ d'informations de registre source de ladite première instruction;
extraire, au niveau de l'étage de décodage, un deuxième champ d'informations de registre source de ladite deuxième instruction; et par la suite
comparer ledit premier champ d'informations de registre de destination audit deuxième champ d'informations de registre source; et
comparer ledit deuxième champ d'informations de registre de destination audit premier champ d'informations de registre source.

3. Procédé de la revendication 1, dans lequel ledit champ de catégorisation de ressources comprend des étiquettes (458) d'identification de ressources qui identifient des exigences de ressources d'une instruction (450) dans un ensemble d'instructions à une unité de distribution (202) d'un microprocesseur lesquelles étiquettes (458) d'identification de ressources sont pourvues par les étapes consistant à:
spécifier une pluralité de classes de ressources de limitations d'attributions de ressources du microprocesseur qui sont mutuellement exclusives les unes par rapport aux autres;
associer chaque instruction de l'ensemble d'instructions à une classe appropriée de ladite pluralité de classes de ressources;
identifier un ensemble de ressources pour une première classe et une deuxième classe de ladite pluralité de classes de ressources partageant une caractéristique de distribution commune; et
attribuer une valeur binaire unique à chacune de ladite pluralité de classes de ressources, où lesdites valeurs binaires de ladite première classe de ressources et ladite deuxième classe de ressources partagent un modèle de masque identifiant ledit ensemble de ressources où seules des instructions dans ledit ensemble de ressources comportent ledit modèle de masque.
